(19) Europäisches Patentamt
European Patent Office
Office européen des brevets

(11) **EP 2 537 727 B1**

(12) **EUROPEAN PATENT SPECIFICATION**

(45) Date of publication and mention
of the grant of the patent:
**11.03.2015 Bulletin 2015/11**

(51) Int Cl.:
***B60W 30/14*** *(2006.01)*  ***B60W 30/18*** *(2012.01)*
***B60W 50/14*** *(2012.01)*  ***B60W 50/00*** *(2006.01)*

(21) Application number: **11170874.9**

(22) Date of filing: **22.06.2011**

(54) **Method for estimating a speed profile for a vehicle**

Verfahren zum Abschätzen eines Geschwindigkeitsprofils eines Fahrzeugs

Procédé d'estimation du profil de vitesse pour un véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.12.2012 Bulletin 2012/52**

(73) Proprietor: **Volvo Car Corporation
40 531 Göteborg (SE)**

(72) Inventors:
• **Levin, Daniel
41481 Göteborg (SE)**

• **Rönnberg, Johan
41262 Göteborg (SE)**

(74) Representative: **Kraenzmer, Martin et al
Volvo Car Corporation
Intellectual Property
Dept 50094 HBBVN
405 31 Göteborg (SE)**

(56) References cited:
**DE-A1- 10 242 124      US-A1- 2007 008 090
US-A1- 2007 150 157**

**Description**

TECHNICAL FIELD

The present invention relates to a method for estimating a speed profile. The vehicle has a steering wheel and comprises a map database with at least one record. The record presents at least one path, the vehicle being located on the path, and the path presenting a plurality of position points. A portion of the points present adjacent points defining a path section. The vehicle further comprises a locator device communicatively coupled to the map database. The method comprises the steps of determining of the location of the vehicle and matching the location with a first of the points on the path, identifying an approaching path section point and estimating a path section speed profile based in part on map data.

BACKGROUND

Run-off accidents that occur due to loss of vehicle control of vehicles, for examples in curves, intersections, roundabouts or the like make up a major part of all run-off-road accidents. According to the Fatal Analysis Reporting System (FARS), a US database saving facts from accidents, 14% of all fatal crashes occurs due to that the vehicle failed to negotiate a curve. To help drivers lower the speed before critical road passages like curves, Curve Speed Warning (CSW) systems have been developed. Such systems alert the driver with audible/visible/haptic etc. warnings to make the driver aware of that the vehicle speed is too high for a safe negotiation of the upcoming curve. Such systems may for example compare the speed of the vehicle with a predetermined maximum limit when a vehicle approaches a critical static traffic environment requiring low speed to be managed safety. If the speed is above the limit, the system warns the driver. A more sophisticated way of checking if the speed is too high to manage an upcoming curve or the like is to estimate a coming speed profile by using the acceleration of the car as well as the current speed. A maximum acceleration limit may then be set at a predetermined distance from an upcoming curve or the like. A step further is so called Curve Speed Control (CSC) systems which autonomously lower the speed of a vehicle before a curve or any other static traffic environment requiring lower speed.

US 2007/0150157A1, on which the preambles of claims 1 and 10 are based, relates to a vehicle curve speed control system adapted for use with a vehicle having a driver. The system includes a map database representing a current vehicle path and a locator device communicatively coupled to the database and configured to determine the location of the vehicle on the path. The system further includes a controller configured to identify approaching curve points of a curve in terms of curvature or radius, and determine a desired speed profile based on driver preference and/or vehicle characteristic input. An acceleration profile is determined, based on the current vehicle speed, and desired speed profile. An acceleration or deceleration command at the present control loop is modified towards achieving an optimal curve speed and is delivered to either a brake or an acceleration module to automatically accelerate or decelerate the vehicle accordingly.

When driving a vehicle on a road, a natural limit for acceleration, or deceleration, is set by the friction available on the road surface. Systems as described above often take into account a maximum possible acceleration in either longitudinal direction or in lateral direction but fails to take a combination thereof into account. If, for example, a driver brakes at the same time as steering through a narrow curve, the maximum lateral acceleration limit may not be reached, but due to the braking operation the vehicle might still lose grip and drive off the road.

SUMMARY

The aim of the present invention is to provide an improved method for estimating a vehicle speed profile.

A method and a system for estimating a speed profile for a vehicle is provided. Further, a motor vehicle provided with such a system is provided. The vehicle has a steering wheel and comprises a map database with at least one record. The record presents at least one path, the vehicle being located on the path, and the path presenting a plurality of position points. A portion of the points present adjacent points defining a path section. The vehicle further comprises a locator device communicatively coupled to the map database. The method comprises the steps of exterminating of the location of the vehicle and matching the location with a first of the points on the path, identifying an approaching path section point and estimating a path section speed profile based on map data. In the step of estimating the speed profile, an acceleration limit map depending on a relationship between maximum possible longitudinal and maximum possible lateral acceleration is used to determine maximum allowed acceleration in the speed profile.

The present method is more efficient, safe and accurate than previous known methods due to that, in the step of estimating the speed profile, an acceleration limit map depending on a relationship between maximum possible longitudinal and maximum possible lateral acceleration is calculated to determine maximum allowed acceleration in the speed profile. By taking the relationship between the accelerations into account when calculating the acceleration limit map, the estimated speed profile will be more optimised as well as safer since the acceleration limit map and thus the estimated speed profile reflects true situations more accurately than earlier presented solutions.

As a result, the above mentioned object is achieved.

In another embodiment, in the step of estimating the speed profile, calculation of the acceleration limit map is based on at least one parameter set by the driver defining a driving style. Such driving style may for example be comfort driving, eco driving or sporty driving style. An advantage with an estimated speed profile based on the driver's preferences is that the driver will experience a speed profile suggested by the vehicle being in line with the desires of the driver. Irritation of a driver is a risk per se in traffic situations and a content driver is therefore safer.

In another embodiment, in the step of estimating a speed profile, calculation of the acceleration limit map is based on at least one of the following parameters: parameters relating to available road friction, parameters relating to vehicle specific data. Examples of parameters relating to available road friction might be outside temperature, air moisture content, road surface reflection and road surface type and finish. Modern vehicles are provided with a number of sensors, cameras and the like and a lot of information is available. Taking parameters affecting the available friction into account will lead to a more safe determining of the friction available. Vehicle specific parameters might be vehicle type, current load ratio and current centre of gravity.

In another embodiment, in the step of estimating the speed profile, determining of the acceleration limit map is based on at least one of the following parameters: road curvature, road banking and road slope.

In another embodiment, in the step of estimating a speed profile, at least one of the following parameters relating to available friction is used: parameters received from an Anti-Lock Brake ABS system provided in the vehicle, parameters received from an Electronic Stability Control ESC system provided in the vehicle, outside temperature, air moisture content, road surface reflection, road surface finish, parameters wirelessly received from other vehicles and parameters wirelessly received from the surrounding infrastructure. The surrounding infrastructure may for example be a mobile phone network, a radio message or a message sent from a traffic sign or the like.

In another embodiment, the method comprises the further step of calculating a projected path section vehicle speed profile based on current vehicle speed, current vehicle longitudinal acceleration and current vehicle lateral acceleration,
and comparing the estimated path section speed profile with the projected path section speed profile.

In another embodiment, the method further comprises the step of warning the driver if the projected path section vehicle speed profile exceeds the estimated path section speed profile. In this case, the warning is preferably issued prior to the event that the projected path section speed exceeds the estimated path section speed profile, in order to provide the driver time to react and lower the vehicle speed before a potentially hazardous situation occurs.

In another embodiment, the method further comprises the step of decelerating the vehicle if the projected path section vehicle speed profile exceeds the estimated path section speed profile.

In another embodiment, the method further comprises the step of informing the driver if the projected path section vehicle speed profile is below the estimated path section speed profile.

Further features of, and advantages with, the present invention will become apparent when studying the appended claims and the following detailed description. Those skilled in the art will realize that different features of the present invention may be combined to create embodiments other than those described in the following, without departing from the scope of the present invention, as defined by the appended claims.

BRIEF DESCRIPTION OF THE DRAWINGS

The various aspects of the invention, including its particular features and advantages, will be readily understood from the following detailed description and the accompanying drawings, in which:

Fig. 1 illustrates a friction circle. The circle represents maximum acceleration due to available friction in x and y direction.

Fig. 2 shows one example of lateral ($a_y$) and longitudinal ($a_x$) accelerations relationship for a Curve Speed Estimator (CSE) system.

Fig.3 shows a further example of lateral ($a_y$) and longitudinal ($a_x$) accelerations relationship.

Fig.4 shows an example of a general lateral ($a_y$) and longitudinal ($a_x$) accelerations relationship.

Fig.5 shows an example of a general lateral ($a_y$) and longitudinal ($a_x$) accelerations relationship, together with the maximum available friction shown as a friction circle. In the figure, the accelerations $a_y$ and $a_x$ have been normalized with the gravitational constant $g$.

Fig.6 shows that the acceleration will end up outside the friction circle, with lose of grip as a result, if both the lateral ($a_y$) and longitudinal ($a_x$) accelerations limits are reached simultaneously without taken into account the relationship between them. In the figure, the accelerations $a_y$ and $a_x$ have been normalized with the gravitational constant g.

Fig.7 shows a principle of Curve Speed Warning (CSW) system using a Curve Speed Estimation (CSE) system.

Fig.8 shows a vehicle approaching a curve with too high speed.

Fig.9 is a block diagram showing one example of a Curve Speed Warning (CSW)/Curve Speed Control (CSC) system architecture.

Fig.10 shows boundary diagram for a Curve Speed Estimation (CSE) system.

Fig. 11 shows an acceleration limit map in accordance with the present invention.

DETAILED DESCRIPTION

The present invention will now be described more fully with reference to the accompanying drawings, in which example embodiments are shown. However, this invention should not be construed as limited to the embodiments set forth herein. Disclosed features of example embodiments may be combined as readily understood by one of ordinary skill in the art to which this invention belongs. Like numbers refer to like elements throughout.

Well-known functions or constructions will not necessarily be described in detail for brevity and/or clarity.

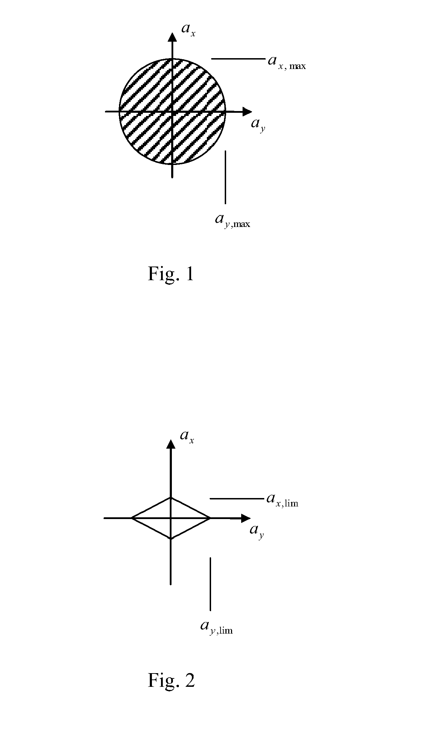

Fig. 1 shows a friction circle, showing the maximum possible acceleration of a vehicle due to available friction in x direction and in y direction. The shape as a circle is an idealised situation where it is assumed that exactly the same maximum acceleration might be in any direction, longitudinal, lateral or any combination thereof. In reality, the relationship between longitudinal and lateral directions is likely to be more complicated.

Maximum available friction is given by available road friction p, and the gravitational constant g, as $\mu$*g. A lot of parameters affect the friction available, such as outside temperature, road surface material and air moisture content, road surface structure, road surface. As may be seen from the figure, friction available may be used for acceleration, or deceleration, in longitudinal direction, in lateral direction or a combination thereof. If the acceleration in any direction exceeds the circle, the vehicle will lose grip risking a run-off accident as a consequence.

Fig. 2 shows an acceleration limit map with one example of lateral ($a_y$) and longitudinal ($a_x$) accelerations relationship for a Curve Speed Estimator (CSE) system according to an exemplary embodiment of the invention. A CSE calculates at least one speed profile for each path. The default speed profile is usually a comfort speed profile. Other speed profiles may be a safety speed profile, an eco-driving speed profile or a sporty speed profile, as set by the driver. Information about the current static and dynamic environment around and ahead of the current vehicle position together with map data is used to calculate the speed profiles. Limitations in the desired speed profile are set by lateral and longitudinal dynamic acceleration limit maps.

The accelerations in longitudinal and lateral directions depend on each other and limitations in the speed are set by the lateral and longitudinal accelerations. The accelerations depend on each other as mentioned above. The relation between the speed and the two accelerations may be expressed as $a_{y,i} = v_i^2 C_i$ for the lateral and as $a_{x,i} = \dfrac{v_{i+1} - v_i}{\Delta T_i}$ for the longitudinal acceleration, respectively. $v_i$ is the vehicle speed in sample point $i$, $v_{i+1}$ is the vehicle speed in the next sample point $i+1$, $C_i$ is the curvature in sample point $i$ of a curve defined as the inverse of the curve radius and $\Delta T_i$ is the time between two samples. The relation between lateral and longitudinal accelerations, i.e. the acceleration limit map, may change due to e.g. road friction, driving style or vehicle state. Some vehicle configuration and type may e.g. allow higher acceleration while driving in a curve. The relation may even depend on taking left-or right turn. To get maximum comfort and safety, the aim is to have zero longitudinal acceleration in the points with smallest radius. In the specific example shown, the acceleration limits are symmetric in the x and y directions respectively. The limitations on the lateral and longitudinal accelerations however also depend on the vehicle speed, since drivers tend to avoid lateral acceleration more at higher speeds.

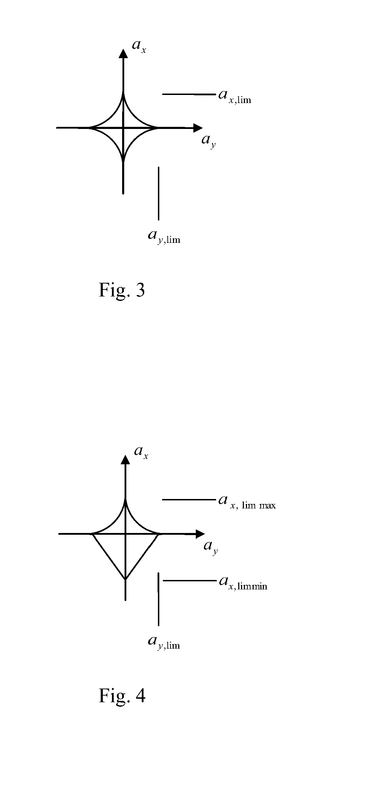

Fig.3 shows a further example of an acceleration limit map with lateral ($a_y$) and longitudinal ($a_x$) accelerations relationship in accordance with the present invention. In this example, the x and y acceleration limits do not depend linearly on each other. A non-linear relationship is more likely to be more accurate, since available grip depends non-linearly on the longitudinal and lateral accelerations. Further, due to both comfort and safety reasons, lateral acceleration limits may be set at a different value than longitudinal acceleration limits. The more aggressive driving style, the larger the area inside the acceleration limit map will become. A comfort or eco driving style acceleration limit map will result in a smaller area inside the acceleration limit map and end up well inside the friction circle, thus ensuring available grip.

Fig.4 shows yet another example of an acceleration limit map in accordance with the present invention. In this example, the allowed lateral accelerations while accelerating do not depend on the longitudinal acceleration in the same way as when decelerating.

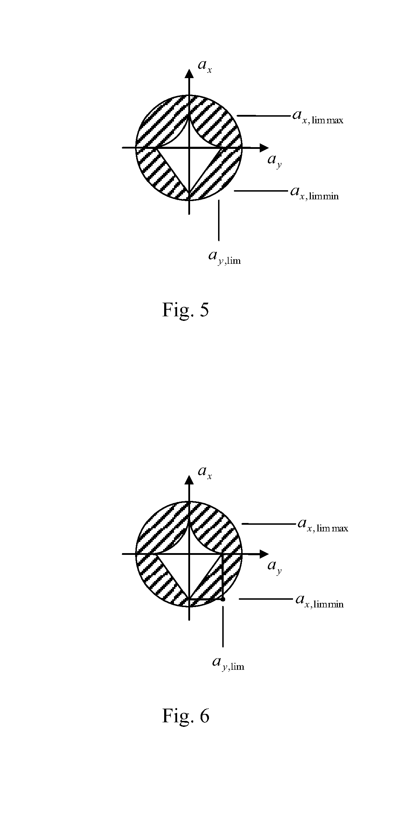

Fig.5 shows an example of an acceleration limit map, together with the maximum available friction shown as the friction circle. As seen from the figure, the acceleration limit map is well positioned inside the friction circle.

Fig.6 shows an example of what would happen if both the lateral and longitudinal accelerations end limits were reached simultaneously; the resulting acceleration would end up outside of the friction circle. Thus, the acceleration will be too high in relation to the available friction and a vehicle in such situation will lose grip with possible road departure as a result thereof. Therefore, it is important to take the relationship between the lateral and longitudinal acceleration into account when deciding the acceleration limits.

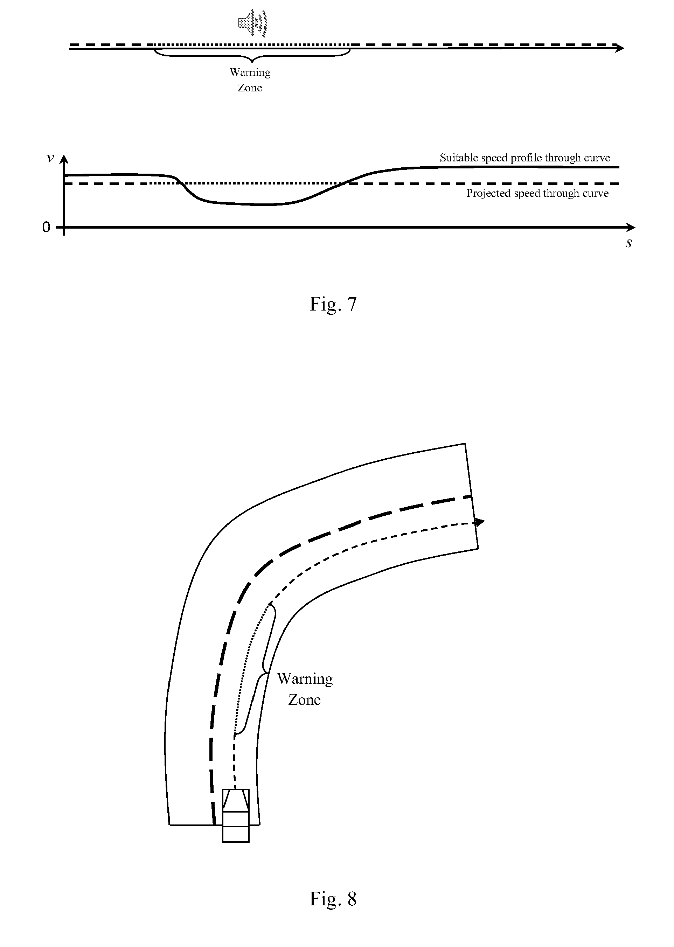

Fig.7 shows a principle of a Curve Speed Warning (CSW) system using a Curve Speed Estimation (CSE) system. The CSW system estimates a projected coming speed through an upcoming curve. As shown in the figure, the estimated speed of the vehicle will at the start of a warning zone exceed the suitable speed profile if the speed is not slowed down. The CSW system will then warn the driver accordingly. Warning message and/or warning sound will continue as long as the estimated vehicle speed exceeds the suitable speed profile. Note that the warning zone preferably starts prior to the event that the projected speed exceeds the estimated speed profile, in order to provide the driver time to react and lower the vehicle speed before a potentially hazardous situation occurs.

Fig.8 shows a vehicle approaching a curve with too high speed. Between the start of the warning zone and the end of the warning zone, the projected speed exceeds the suitable speed profile and the Curve Speed Warning system will warn accordingly. Warning will continue until the estimated speed is below the suitable speed profile.

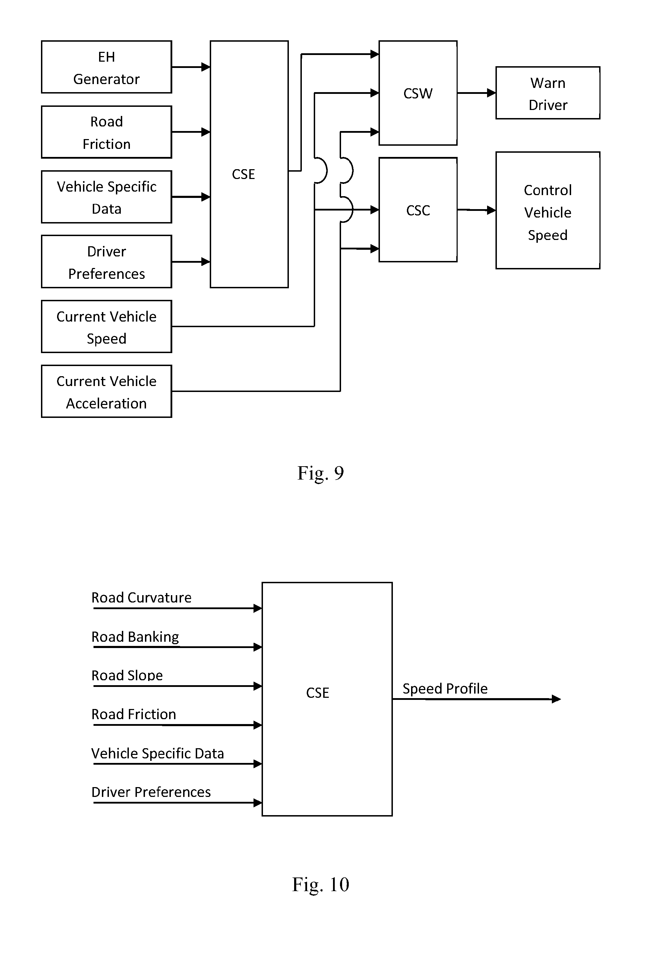

Fig.9 is a block diagram showing an example of a Curve Speed Warning (CSW)/Curve Speed Control (CSC) system architecture. The Curve Speed Estimator (CSE) may use information from an Electronic Horizon (EH) using map data, data concerning road friction available, vehicle specific data and parameters set by the driver for estimating a desired speed profile. Dynamic information used to estimate the speed profile may thus be road friction, weather situation, but not current vehicle speed. Static information like type of lane markings and signs along the road are also taken into account from map data. Current vehicle state parameters such as vehicle type, centre of mass affecting roll behavior, number of passengers affecting the load ratio and the weight of the vehicle also affects the speed profile. The method may also take into consideration if a trailer is connected and the mass relation trailer/vehicle. The driving style with respect to curve handling may further be measured and taken into consideration. Such measures may for example be braking before curves, acceleration at curve exits and cutting corners. The Curve Speed Warning (CSW) system and the Curve Speed Control (CSC) systems compare the estimated speed profile with a predicted coming vehicle speed based on current vehicle speed and current vehicle acceleration to warn the driver and control vehicle speed, respectively.

Fig.10 shows a boundary diagram for an example of a Curve Speed Estimation (CSE) system. From map data, information about road curvature, road banking and road slope is achieved. Further, information about available road friction, vehicle specific data and driver preferences is achieved. Based on this information, estimation of a speed profile is performed.

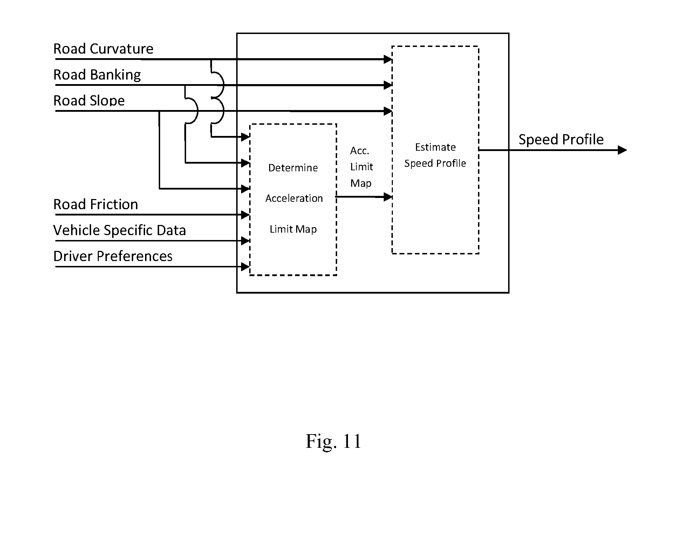

Fig. 11 shows a boundary diagram for an example of a Curve Speed Estimation (CSE) system in accordance with the present invention. To determine a dynamic acceleration limit map, data relating to available road friction, the specific vehicle driven and preferences set by the driver are taken into account. The acceleration limit map is based on a relationship present between the acceleration in lateral and longitudinal directions as shown in Figs. 2-5. The map is re-calculated continuously depending on changes in data affecting the acceleration limits.

Parameters used to determine the available road friction may for example be information regarding the material of the road surface, outside temperature, air moisture content, information from the Anti-Lock Brake System (ABS), Electronic Stability Control (ESC) system and size of any vibrations from the wheels, provided by sensors in the vehicle. Further parameters are road surface finish that may depend on snow, ice, oil or gravel being present on the road surface. Yet further information regarding road friction could be collected via wireless communication with other vehicles and or the traffic infrastructure.

From the vehicle, information about centre of gravity, current load ratio, current speed and current acceleration in longitudinal direction as well as in lateral direction may be used. Although the invention has been described with reference to example embodiments, many different alterations, modifications and the like will become apparent for those skilled in the art within the scope of the appended claims.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

**Claims**

1. Method for estimating a speed profile for a vehicle, the vehicle having a steering wheel and comprising a map database with at least one record, wherein the record presents at least one path, the vehicle being located on the path, the path presenting a plurality of position points, and wherein a portion of the points present adjacent points defining a path section, the vehicle further comprising a locator device communicatively coupled to the map database, the method comprising the steps of:

- determining of the location of the vehicle and matching the location with a first of the points on the path,
- identifying an approaching path section point,
- estimating a speed profile based on map data, **characterized in that**
in the step of estimating the speed profile, an acceleration limit map depending on a relationship between a maximum possible longitudinal acceleration and a maximum possible lateral acceleration is used to determine the maximum allowed accelerations in the speed profile.

2. Method according to claim 1, wherein in the step of estimating the speed profile, determining of the acceleration limit map is based on at least one parameter set by the driver defining a driving style.

3. Method according to claim 1 or 2, wherein, in the step of estimating the speed profile, determining of the acceleration limit map is based on at least one of the following parameters: parameters relating to available road friction and parameters relating to vehicle specific data.

4. Method according to claim 1, 2 or 3 wherein, in the step of estimating the speed profile, determining of the acceleration limit map is based on at least one of the following parameters: road curvature, road banking and road slope.

5. Method according to claim 3, wherein, in the step of estimating the speed profile, at least one of the following parameters relating to available friction is used: parameters received from an Anti-Lock Brake ABS system provided in the vehicle, parameters received from an Electronic Stability Control ESC system provided in the vehicle, outside temperature, air moisture content, road surface reflection, road surface finish, parameters wirelessly received from other vehicles and parameters wirelessly received from an surrounding infrastructure.

6. Method according to any preceding claim, comprising the further step of

- calculating a projected path section vehicle speed profile based on current vehicle speed, current vehicle longitudinal acceleration and current vehicle lateral acceleration,
- comparing the estimated path section speed profile with the projected path section speed profile.

7. Method according to the claim 6, comprising the further step of

- warning the driver if the projected path section speed profile exceeds the estimated path section speed profile.

8. Method according to claim 6 or 7, comprising the further step of decelerating the vehicle if the projected path section speed profile exceeds the estimated path section speed profile.

9. Method according to any of claim 6-8, comprising the further step of informing the driver if the projected path section speed profile is below the estimated path section speed profile.

10. System for estimating a speed profile for a vehicle, the vehicle having a steering wheel and comprising a map database with at least one record, wherein the record presents at least one path, the vehicle being located on the path, the path presenting a plurality of position points, and wherein a portion of the points present adjacent points defining a path section, the vehicle further comprising a locator device communicatively coupled to the map database, the system comprising

- means for determining of the location of the vehicle and matching the location with a first of the points on the path,
- means for identifying an approaching path section point,
- means for estimating a speed profile based on map data,
**characterized in that**
the means for estimating the speed profile comprises an acceleration limit map depending on a relationship between a maximum possible longitudinal acceleration and a maximum possible lateral acceleration is used to determine the maximum allowed accelerations in the speed profile.

11. A motor vehicle provided with a system in accordance with claim 10.

**Patentansprüche**

1. Verfahren zum Abschätzen eines Geschwindigkeitsprofils für ein Fahrzeug, wobei das Fahrzeug ein Lenkrad besitzt und eine Kartendatenbank mit mindestens einem Datensatz umfasst, wobei der Datensatz mindestens einen Weg darstellt, wobei sich das Fahrzeug auf dem Weg befindet, wobei der Weg mehrere Positionspunkte darstellt und wobei ein Teil der Punkte benachbarte Punkte darstellt, die einen Wegabschnitt definieren, wobei das Fahrzeug ferner eine Ortungsvorrichtung umfasst, die kommunikationstechnisch mit der Kartendatenbank gekoppelt ist,

wobei das Verfahren die folgenden Schritte umfasst:

- Bestimmen der Position des Fahrzeugs und Abgleichen der Position mit einem ersten der Punkte auf dem Weg,
- Identifizieren eines nahenden Wegabschnittspunkts,
- Abschätzen eines Geschwindigkeitsprofils basierend auf Kartendaten,

**dadurch gekennzeichnet, dass**

in dem Schritt des Abschätzens des Geschwindigkeitsprofils eine Beschleunigungsbegrenzungskarte, die von einer Beziehung zwischen einer maximal möglichen Längsbeschleunigung und einer maximal möglichen Querbeschleunigung abhängig ist, verwendet wird, um die maximal zulässigen Beschleunigungen in dem Geschwindigkeitsprofil zu bestimmen.

2. Verfahren nach Anspruch 1, wobei in dem Schritt des Abschätzens des Geschwindigkeitsprofils das Bestimmen der Beschleunigungsbegrenzungskarte auf mindestens einem Parameter basiert, der von dem Fahrer festgelegt wird und einen Fahrstil definiert.

3. Verfahren nach Anspruch 1 oder 2, wobei in dem Schritt des Abschätzens des Geschwindigkeitsprofils das Bestimmen der Beschleunigungsbegrenzungskarte auf mindestens einem der folgenden Parameter basiert: Parameter, die sich auf die verfügbare Straßenreibung beziehen, und Parameter, die sich auf fahrzeugspezifische Daten beziehen.

4. Verfahren nach Anspruch 1, 2 oder 3, wobei in dem Schritt des Abschätzens des Geschwindigkeitsprofils das Bestimmen der Beschleunigungsbegrenzungskarte auf mindestens einem der folgenden Parameter basiert: Straßenkrümmung, Straßenquerneigung und Straßengefälle.

5. Verfahren nach Anspruch 3, wobei in dem Schritt des Abschätzens des Geschwindigkeitsprofils mindestens einer der folgenden Parameter, die sich auf die verfügbare Reibung beziehen, verwendet wird: Parameter, die von einem in dem Fahrzeug vorgesehenen Anti-Blockier-System ABS empfangen werden, Parameter, die von einem in dem Fahrzeug vorgesehenen elektronischen Stabilitätskontrollsystem (ESC-System) empfangen werden, Außentemperatur, Luftfeuchte, Straßenoberflächenreflektion, Straßenoberflächenbeschaffenheit, Parameter, die von anderen Fahrzeugen drahtlos empfangen werden und Parameter, die von einer umgebenden Infrastruktur drahtlos empfangen werden.

6. Verfahren nach einem der vorhergehenden Ansprüche, das die folgenden weiteren Schritte umfasst:

- Berechnen eines prognostizierten Wegabschnitts-Fahrzeuggeschwindigkeitsprofils basierend auf der aktuellen Fahrzeuggeschwindigkeit, der aktuellen Fahrzeuglängsbeschleunigung und der aktuellen Fahrzeugquerbeschleunigung,
- Vergleichen des abgeschätzten Wegabschnitts-Geschwindigkeitsprofils mit dem prognostizierten Wegabschnitts-Geschwindigkeitsprofil.

7. Verfahren nach Anspruch 6, das den folgenden weiteren Schritt umfasst:

- Warnen des Fahrers dann, wenn das prognostizierte Wegabschnitts-Geschwindigkeitsprofil das abgeschätzte Wegabschnitts-Geschwindigkeitsprofil übersteigt.

8. Verfahren nach Anspruch 6 oder 7, das den weiteren Schritt des Verzögerns des Fahrzeugs dann, wenn das prognostizierte Wegabschnitts-Geschwindigkeitsprofil das abgeschätzte Wegabschnitts-Geschwindigkeitsprofil übersteigt, umfasst.

9. Verfahren nach einem der Ansprüche 6-8, das den weiteren Schritt des Informierens des Fahrers dann, wenn das prognostizierte Wegabschnitts-Geschwindigkeitsprofil unter dem abgeschätzten Wegabschnitts-Geschwindigkeitsprofil liegt, umfasst.

10. System zum Abschätzen eines Geschwindigkeitsprofils für ein Fahrzeug, wobei das Fahrzeug ein Lenkrad besitzt und eine Kartendatenbank mit mindestens einem Datensatz umfasst, wobei der Datensatz mindestens einen Weg darstellt, wobei sich das Fahrzeug auf dem Weg befindet, wobei der Weg mehrere Positionspunkte darstellt und wobei ein Teil der Punkte benachbarte Punkte darstellt, die einen Wegabschnitt definieren, wobei das Fahrzeug ferner eine Ortungsvorrichtung umfasst, die kommunikationstechnisch mit der Kartendatenbank gekoppelt ist,

wobei das System Folgendes umfasst:

- Mittel zum Bestimmen der Position des Fahrzeugs und zum Abgleichen der Position mit einem ersten der Punkte auf dem Weg,
- Mittel zum Identifizieren eines nahenden Wegabschnittspunkts,
- Mittel zum Abschätzen eines Geschwindigkeitsprofils basierend auf Kartendaten,

**dadurch gekennzeichnet, dass**
die Mittel zum Abschätzen des Geschwindigkeitsprofils eine Beschleunigungsbegrenzungskarte umfassen, die von einer Beziehung zwischen einer maximal möglichen Längsbeschleunigung und einer maximal möglichen Querbeschleunigung abhängig ist und verwendet wird, um die maximal zulässigen Beschleunigungen in dem Geschwindigkeitsprofil zu bestimmen.

11. Kraftfahrzeug, das mit einem System nach Anspruch 10 versehen ist.

**Revendications**

1. Procédé d'estimation d'un profil de vitesse pour un véhicule, le véhicule disposant d'un volant de direction et comprenant une base de données d'application contenant au moins un enregistrement, dans lequel l'enregistrement présente au moins un trajet, le véhicule étant situé sur le trajet, le trajet présentant une pluralité de points de position, et dans lequel une partie des points présente des points adjacents définissant un tronçon de trajet, le véhicule comprenant en outre un dispositif localisateur couplé de manière communicative à la base de données d'application,
le procédé comprenant les étapes de :

- détermination de l'emplacement du véhicule et mise en correspondance de l'emplacement avec un premier des points sur le trajet,
- identification d'un point d'approche du tronçon de trajet,
- estimation d'un profil de vitesse sur la base de données d'application,

**caractérisé en ce que**
à l'étape d'estimation du profil de vitesse, une application de limite d'accélération dépendant d'une relation entre une accélération longitudinale maximale possible et une accélération latérale maximale possible est utilisée pour déterminer les accélérations maximales admises dans le profil de vitesse.

2. Procédé selon la revendication 1, dans lequel, à l'étape d'estimation du profil de vitesse, la détermination de l'application de limite d'accélération est basée sur au moins un paramètre fixé par le conducteur qui définit un style de conduite.

3. Procédé selon la revendication 1 ou 2, dans lequel, à l'étape d'estimation du profil de vitesse, la détermination de l'application de limite d'accélération est basée sur au moins un des paramètres suivants : des paramètres liés à un frottement sur route disponible et des paramètres liés à des données propres au véhicule.

4. Procédé selon la revendication 1, 2 ou 3, dans lequel, à l'étape d'estimation du profil de vitesse, la détermination de l'application de limite d'accélération est basée sur au moins un des paramètres suivants : une courbure de route, un dévers de route et une pente de route.

5. Procédé selon la revendication 3, dans lequel, à l'étape d'estimation du profil de vitesse, au moins un des paramètres suivants liés à un frottement disponible est utilisé : des paramètres reçus d'un système de freinage antiblocage ABS équipant le véhicule, des paramètres reçus d'un système électrostabilisateur programmé ESC équipant le véhicule, la température extérieure, la teneur en humidité de l'air, la réflexion de surface de route, l'état de surface de route, des paramètres reçus sans fil d'autres véhicules et des paramètres reçus sans fil d'une infrastructure environnante.

6. Procédé selon l'une quelconque des revendications précédentes, comprenant l'étape supplémentaire de

- calcul d'un profil de vitesse projeté du véhicule sur le tronçon de route sur la base de la vitesse actuelle du véhicule, de l'accélération longitudinale actuelle du véhicule et de l'accélération latérale actuelle du véhicule,
- comparaison du profil de vitesse estimé du véhicule sur le tronçon de route au profil de vitesse projeté sur le tronçon de trajet.

7. Procédé selon la revendication 6, comprenant l'étape supplémentaire de

- mise en garde du conducteur si le profil de vitesse projeté sur le tronçon de trajet excède le profil de vitesse estimé sur le tronçon de trajet.

8. Procédé selon la revendication 6 ou 7, comprenant l'étape supplémentaire de décélération du véhicule si le profil de vitesse projeté sur le tronçon de trajet excède le profil de vitesse estimé sur le tronçon de trajet.

9. Procédé selon l'une quelconque des revendications 6 à 8, comprenant l'étape supplémentaire d'information du conducteur si le profil de vitesse projeté sur le tronçon de trajet est en deçà du profil de vitesse estimé sur le tronçon de trajet.

10. Système d'estimation d'un profil de vitesse pour un véhicule, le véhicule disposant d'un volant de direction et comprenant une base de données d'application contenant au moins un enregistrement, dans lequel l'enregistrement présente au moins un trajet, le véhicule étant situé sur le trajet, le trajet présentant une pluralité de points de position, et dans lequel une partie des points présente des points adjacents définissant un tronçon de trajet, le véhicule comprenant en outre un dispositif localisateur couplé de manière communicative à la base de données d'application,

le système comprenant

- un moyen de détermination de l'emplacement du véhicule et de mise en correspondance de l'emplacement avec un premier des points sur le trajet,
- un moyen d'identification d'un point d'approche du tronçon de trajet,
- un moyen d'estimation d'un profil de vitesse sur la base de données d'application,

**caractérisé en ce que**
le moyen d'estimation du profil de vitesse comprend une application de limite d'accélération dépendant d'une relation entre une accélération longitudinale maximale possible et une accélération latérale maximale possible, utilisée pour déterminer les accélérations maximales admises dans le profil de vitesse.

11. Véhicule motorisé équipé d'un système selon la revendication 10.

Fig. 1

Fig. 2

Fig. 3

Fig. 4

Fig. 5

Fig. 6

Warning
Zone

$v$

Suitable speed profile through curve

Projected speed through curve

0

$s$

Fig. 7

Warning
Zone

Fig. 8

Fig. 9

Fig. 10

Fig. 11

**EP 2 537 727 B1**

**Patent documents cited in the description**

- US 20070150157 A1